# EUROPEAN PATENT SPECIFICATION

(11) **EP 1 922 380 B1**
(45) Date of publication and mention of the grant of the patent: **23.03.2011**
(21) Application number: 06783652.8
(22) Date of filing: 18.08.2006
(51) Int. Cl.: C09J 133/08

(54) **ACRYLIC PRESSURE SENSITIVE ADHESIVE COMPOSITION**
HAFTKLEBEMITTELZUSAMMENSETZUNG AUF ACRYLATBASIS
COMPOSITION D'ADHÉSIF ACRYLIQUE SENSIBLE À LA PRESSION

(30) Priority: 19.08.2005 KR 20050076372
(43) Date of publication of application: 21.05.2008
(73) Proprietor: LG Chem, Ltd., Seoul 150-721 (KR)
(72) Inventor: CHUN, Sang-ki, Daejeon 305-762 (KR); KHO, Dong-han, Daegu 704-342 (KR); CHANG, Suk-ky, Daejeon 305-721 (KR); OH, Jae-Seung, Seoul 135-521 (KR); LEE, Byoung-bae, Chungcheongnam-do 330-934 (KR)
(74) Representative: Goddar, Heinz J.
(86) International application number: PCT/KR2006/003246
(87) International publication number: WO 2007/021152

(56) References cited:
- JP-A- 06 128 539
- JP-A- 2000 129 235
- JP-A- 2003 105 292
- US-A1- 2003 114 560
- US-B1- 6 372 829

## Description

### Technical Field

The present invention relates to an acrylic adhesive composition, and more particularly, to an acrylic adhesive composition comprising a room temperature eutectic salt prepared by mixing a metal salt represented by the formula (1) below, composed of an anion having a perfluoroalkane group, which is a conjugate base of a super acid, and an alkali metal cation with a compound having an amide group represented by the formula (2) below, which is used to increase the degree of dissociation of the metal salt:

ChemistryFigure 1 M⁺ X⁻ (YOm R_{f})ₙ

where M is an alkali metal cation and R_{f} is a perfluoroalkane group having 1-4 carbon atoms (If Y is carbon, m = 1. If Y is sulfur, m = 2. If X is oxygen, n = 1. If X is nitrogen, n =2. If X is carbon, n = 3.);

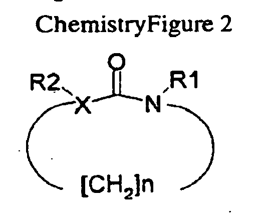

where R₁ is hydrogen, an alkyl group having 1-10 carbon atoms, an alkenyl group having 2-10 carbon atoms or an aryl or alkaryl group having 6-10 carbon atoms; R₂ is hydrogen, halogen, an alkyl group having 1-10 carbon atoms, an alkenyl group having 2-10 carbon atoms or an aryl or alkaryl group having 6-10 carbon atoms; X is carbon or nitrogen; and n is 0-6.

The acrylic adhesive composition of the present invention has superior endurance reliability, antistaticity and adhesive force with no whitening under high temperature and humidity.

### Background Art

Acrylic adhesive compositions are used in various fields for industrial sheets, optical adhesives, electronic adhesives, etc. Particularly, electronic adhesives are widely used in liquid crystal displays for notebook computers, monitors, TVs, etc., replacing CRT's, because they contribute to the reduction of weight and thickness of products.

To manufacture a liquid crystal display, a bond layer or an adhesive layer is required to bond a liquid crystal cell with a polarizing plate. The polarizing plate comprises aligned iodine compounds or dichromatic polarizing materials, a triacetylcellulose (TAC)-based protective film for protecting the polarizing elements, an adhesive layer, a release film, etc.

Static electricity, which is generated during the manufacture of a liquid crystal display when the release film is removed from the adhesive layer to bond the polarizing plate to the liquid crystal cell, affects the alignment of the liquid crystals inside the liquid crystal display and deteriorates the product quality. An antistatic layer may be formed on the outer surface of the polarizing plate to reduce the generation of static electricity, but it is neither an ideal nor an effective measure. In order to prevent the generation of static electricity completely, the adhesive needs to have an antistatic property. Conductive materials such as metal powder and carbon particles or ionic materials such as surfactants are added to an adhesive to confer an antistatic property. However, the conductive materials have to be used in large quantities, which may impair transparency. Also, the surfactant is susceptible to humidity and may cause a decrease in adhesive force as it migrates toward the surface of the adhesive. Organic or inorganic salts are also added to an adhesive to attain an antistatic property.

Korean Patent Publication No. 10-2004-0030919 discloses an antistatic adhesive comprising at least one organic salt. The organic salt comprises at least 5 parts by weight. But, the present inventors found that when an organic salt is added to an adhesive in at least 5 parts by weight, the adhesive properties of the adhesive, especially the endurance reliability, worsen significantly. Besides, it is more expensive.

Japanese Patent Laid-Open No. Hei 6-128539 discloses an antistatic acrylic adhesive comprising a polyether polyol compound and at least one alkali metal salt. But, when isocyanate is used as a crosslinking agent, the polyether polyol compound significantly affects the crosslinking density. Thus, as described in the presented examples, crosslinking has to be performed before mixing the polyether polyol compound with the alkali metal salt, which makes the process inapplicable for practical use. The present inventors also found that when the alkali metal salt mentioned in the patent is added, transparency worsens under high temperature and humidity.

Japanese Patent Laid-Open No. 2005-31282 discloses an antistatic resin composition for optical elements using a metal salt comprising lithium ion and a hydrophilic monomer comprising ethylene oxide. The metal salt provides conductivity and the hydrophilic monomer reduces the generation of static electricity by absorbing moisture from the air and prevents whitening caused by haze even under hot and humid conditions. But, according to the findings of the present inventors, if the hydrophilic additive comprising ethylene oxide is added in an amount required to reduce the generation of static electricity by absorbing moisture from the air, the physical properties of the adhesive, particularly adhesive force and endurance reliability, worsen significantly. Therefore, an adhesive having a superior antistatic property and superior physical properties, including endurance reliability, without whitening under high temperature and humidity is badly needed with regard to liquid crystal displays.

### Disclosure of Invention

### Technical Problem

The present inventors found that, when a room temperature eutectic salt prepared by mixing a metal salt composed of an anion having a perfluoroalkane group, which is a conjugate base of a super acid, and an alkali metal cation with a compound having an amide group is used in an acrylic adhesive, the resultant acrylic adhesive has superior endurance reliability and superior antistaticity and does not whiten under high temperature and humidity. Because of the compound having an amide group, the metal salt increases the degree of dissociation, thereby significantly improving the electrical conductivity of the adhesive. The room temperature eutectic salt improves the antistatic property, without impairing transparency even when used in large quantities and does not cause whitening under high temperature and humidity.

An object of the present invention is to provide an acrylic adhesive composition having superior endurance reliability, adhesive force and antistatic property without whitening under high temperature and humidity using a room temperature eutectic salt and a polarizing plate, and a liquid crystal display device prepared using the same.

### Technical Solution

The present invention provides an acrylic adhesive composition comprising a room temperature eutectic prepared by mixing a metal salt composed of an anion having a perfluoroalkane group, which is a conjugate base of a super acid, and an alkali metal cation with a compound having an amide group.

More particularly, the present invention provides an acrylic adhesive composition comprising:

a) 100 parts by weight of an acrylic copolymer;

b) 0.001-25 parts by weight of a room temperature eutectic salt prepared by mixing a metal salt composed of an anion having a perfluoroalkane group, which is a conjugate base of a super acid, and an alkali metal cation with a compound having an amide group; and

c) 0.01-10 parts by weight of a polyfunctional crosslinking agent.

The present invention also provides a polarizing plate comprising the adhesive composition on one or both sides of a polarizing film as an adhesive layer, which may further comprise at least one layer selected from the group consisting of a protective film, a reflective film, an antiglare film, a phase difference plate, a wide view angle compensation film and a brightness enhancement film.

The present invention further provides a liquid crystal display device comprising a liquid crystal panel in which the polarizing plate is adjoined on one or both sides of a liquid crystal cell.

Hereunder is given a detailed description of the present invention.

The present invention aims at providing an acrylic adhesive composition comprising a room temperature eutectic salt prepared by mixing a metal salt represented by the formula (1) below, composed of an anion having a perfluoroalkyl group, which is a conjugate base of a super acid, and an alkali metal cation with a compound having an amide group represented by the formula (2) below, which has superior endurance reliability, antistatic property, etc. without whitening under high temperature and humidity:

[Chemistry Figure 1] M⁺ X⁻ (YOm R_{f})ₙ

where M is an alkali metal cation and R_{f} is a perfluoroalkane group having 1-4 carbon atoms (If Y is carbon, m = 1. If Y is sulfur, m = 2. If X is oxygen, n = 1. If X is nitrogen, n =2. If X is carbon, n = 3.);

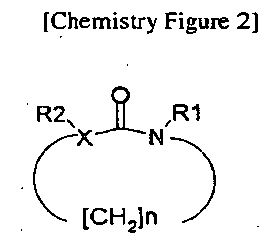

where R₁ is hydrogen, an alkyl group having 1-10 carbon atoms, an alkenyl group having 2-10 carbon atoms or an aryl or alkaryl group having 6-10 carbon atoms; R₂ is hydrogen, halogen, an alkyl group having 1-10 carbon atoms, an alkenyl group having 2-10 carbon atoms or an aryl or alkaryl group having 6-10 carbon atoms; X is carbon or nitrogen; and n is 0-6.

When the room temperature eutectic salt prepared by mixing the metal salt with the compound having an amide group is added within 25 parts by weight per 100 parts by weight of the acrylic copolymer, the resultant composition has superior endurance reliability and antistatic property without sacrificing light transmittance.

The metal salt is known to weakly coordinate with metal cations and be highly hydrophobic due to the resonance structure of the anion and the large electronegativity of fluorine atoms. The compound having an amide group acts like a solvent for the cation and the anion of the metal salt, resulting in an electrolytic eutectic salt with a large dielectric and dissociation constant. For example, a 1:4 mixture of LiN(SO₂CF₃)₂ having a melting point of 234°C and acetamide (CH₃CONH₂) having a melting point of 81.2°C results in an electrolyte having a eutectic point of -67°C and a conductivity of 1.07 mS/cm. The polar C=O of acetamide and the Li⁺cation of LiN(SO₂CF₃)₂ forms a coordinate bonding, and the polar NH group of acetamide and the N(SO₂CF₃)₂⁻ anion of LiN(SO₂CF₃)₂ forms a complex through hydrogen bonding, thereby reducing hydrogen bonding between acetamides and electrostatic bonding between Li⁺ and N(SO₂CF₃)₂⁻, and resulting in a room temperature eutectic salt. The resultant room temperature eutectic salt has a higher degree of dissociation than the metal salt and, thus, has larger electrical conductivity.

Hereunder is given a detailed description of each constituent of the adhesive composition.

a) The acrylic copolymer may be obtained by copolymerizing 90-99.9 parts by weight of a (meth)acrylate ester monomer having an alkyl group with 1-12 carbon atoms with 0.1-10 parts by weight of a vinylic and/or acrylic monomer having a crosslinkable functional group.

Preferably, the (meth)acrylate ester monomer having an alkyl group with 1-12 carbon atoms is comprised in 90-99.9 parts by weight per 100 parts by weight of the acrylic copolymer. If its content is smaller than 90 parts by weight, initial adhesive force decreases. In contrast, if it is larger than 99.9 parts by weight, durability may worsen because of reduced cohesiveness.

For the (meth)acrylate ester monomer, an alkyl ester of an acrylic acid (or methacrylic acid) having 1-12 carbon atoms, preferably an alkyl ester having 2-8 carbon atoms, is used. It is preferred that the number of the carbon atoms of the alkyl group is in the range from 2 to 8 in order to maintain cohesiveness at high temperature, because the cohesiveness of the adhesive decreases if the alkyl group of the alkyl (meth)acrylate is a long chain. For example, the (meth)acrylate ester monomer having an alkyl group with 1-12 carbon atoms may be butyl (meth)acrylate, 2-ethylhexyl (meth)acrylate, ethyl (meth)acrylate, methyl (meth)acrylate, *n*-propyl (meth)acrylate, isopropyl (meth)acrylate, *t*-butyl (meth)acrylate, pentyl (meth)acrylate, *n*-octyl (meth)acrylate, isooctyl (meth)acrylate, 2-ethylbutyl (meth)acrylate, isononyl (meth)acrylate, etc. and may be used alone or in combination.

During the preparation of the acrylic copolymer, a copolymerization monomer may be further added to control the glass transition temperature of the adhesive or to confer other functionalities. For such a monomer, acrylonitrile, (meth)acrylamide, N-methylacrylamide, styrene, methylstyrene, vinyltoluene, glycidyl (meth)acrylate, vinyl acetate, etc. are preferred.

a) The vinylic and/or acrylic monomer having a crosslinkable functional group reacts with the crosslinking agent and confers cohesiveness or adhesion strength by chemical bonding, so that cohesive fracture may not occur in the adhesive under hot or humid conditions. Preferably, a) the vinylic monomer and/or acrylic monomer having a crosslinkable functional group, or a mixture thereof, comprises 0.1-10 parts by weight. If the content of the monomer having a crosslinkable functional group is smaller than 0.1 parts by weight, cohesive fracture tends to occur under hot or humid conditions and improvement of the adhesive force declines. In contrast, if the content of the monomer is larger than 10 parts by weight, excessive surface migration occurs because of reduced compatibility. In addition, fluidity characteristics worsen and the ability to relieve stress declines because of increased cohesiveness.

Non-limiting examples of the monomer having a crosslinkable functional group include the monomers having a hydroxyl group, such as 2-hydroxyethyl (meth)acrylate, 2-hydroxypropyl (meth)acrylate, 4-hydroxybutyl (meth)acrylate, 2-hydroxyethylene glycol (meth)acrylate, 2-hydroxypropylene glycol (meth)acrylate, etc. and the monomers having a carboxylic acid group, such as acrylic acid, methacrylic acid, acrylic acid dimer, itaconic acid, maleic acid, maleic anhydride, etc. These monomers may be used alone or in combination.

It is preferred to sufficiently remove the foam-inducing components inside the adhesive, including volatile substances, reaction residues, etc. If the adhesive has too small an elasticity because the crosslinking density or molecular weight is too low, the small foams present in between the glass plate and the adhesive layer at high temperature grow to form a scatterer inside the adhesive layer. Thus, if an adhesive having too large an elasticity is used for a long period of time, peeling may occur at the end of the adhesive sheet because of excessive crosslinking. The viscoelastic property of an adhesive is dependent upon the molecular weight of the polymer chain, molecular weight distribution, molecular structure, etc. Among these factors, the viscoelastic property is mainly determined by the molecular weight. Thus, the acrylic copolymer used in the present invention preferably has a molecular weight in the range from 400,000 to 2,000,000, when considering endurance stability. The acrylic copolymer may be prepared by the conventional radical copolymerization process.

The acrylic copolymer may be prepared by solution polymerization, photopolymerization, bulk polymerization, suspension polymerization, emulsion polymerization, etc. Among them, solution polymerization is particularly preferred. Preferably, the polymerization is performed at 50-140 (C by adding an initiator to a uniform monomer mixture.

In the adhesive composition of the present invention, b) the room temperature eutectic salt prepared by mixing the metal salt represented by the formula (1), composed of an anion having a perfluoroalkane group, which is a conjugate base of a super acid, and an alkali metal cation represented by the formula (1) with a compound having an amide group represented by the formula (2) confers ion conductivity to the adhesive. The room temperature eutectic salt is highly compatible with the adhesive, is without surface migration, is optically transparent and is without does not whitening the adhesive under high temperature and humidity. The content of the room temperature eutectic salt may be adjusted in the range from 0.001 to 25 parts by weight in order to attain wanted the desired ion conductivity and antistatic property. Within that range, whitening does not occur under high temperature and humidity, and light transmittance, adhesive force, endurance reliability, antistatic property, etc. are maintained. If the content of the room temperature eutectic salt is smaller than 0.001 parts by weight, the antistatic property declines. In contrast, if it is larger than 25 parts by weight, adhesion durability declines because of reduced cohesiveness.

Specific examples of the anion having a perfluoroalkane group, which is a conjugate base of a super acid, include bistrifluoromethanesulfonimide (N(SO₂CF₃)₂⁻), bistrifluoromethanecarbonylsulfonimide (N(COCF₃)₂⁻), bispentafluoroethanesulfonimide (N(SOC₂F₅)₂⁻), bispentafluoroethanecarlonylimide (N(COC₂F₅)₂⁻), bisperfluorobutanesulfonimide (N(SO₂C₄F₉)₂⁻), bisperfluorobutanecarbonylimide (N(COC₄F₉)₂⁻), tristrifluoromethanesulfonylmethide (C(SO₂CF₃)₃⁻), tristrifluoromethanecarbonylmethide (C(SO₂CF₃)₃⁻), etc. Specific examples of the alkali metal cation include lithium (Li⁺), sodium (Na⁺), potassium (K⁺), etc. And, specific examples of the compound having an amide group include acetamide, N-methylacetamide, N-ethylacetamide, propionamide, urea, N,N'-dimethylurea, N,N,N'-trimethylurea, 2-imidazolidinone, 2,4-imidazolidinone, N,N'-trimethyleneurea, caprolactam (cyclic amide), 2-azetidinone, 2-pyrrolidinone, 5-methyl-2-pyrrolidinone, 2-piperidinone, 3-propyl-2-azepanone, 5-butyl-2-azepanone, 7-butyl-2-azepanone, 1-aza-2-cyclooctane, etc. The room temperature eutectic salt may be prepared by mixing 100 parts by weight of the metal salt with 200-600 parts by weight of the compound having an amide group at room temperature.

In the adhesive composition of the present invention, c) the polyfunctional crosslinking agent reacts with the carboxyl group or the hydroxy group and increases cohesiveness of the adhesive. Preferably, the crosslinking agent comprises 0.01-10 parts by weight per 100 parts by weight of a) the acrylic copolymer.

The polyfunctional crosslinking agent may be isocyanate-based, epoxy-based, aziridine-based, metal chelate-based, etc. Among them, an isocyanate-based crosslinking agent is easier to use. The isocyanate-based crosslinking agent may be toluene diisocyanate, xylene diisocyanate, diphenylmethane diisocyanate, hexamethylene diisocyanate, isoform diisocyanate, tetramethylxylene diisocyanate, naphthalene diisocyanate or a reaction product thereof with a polyol such as trimethylolpropane.

The epoxy-based crosslinking agent may be ethylene glycol diglycidyl ether, triglycidyl ether, trimethylolpropane triglycidyl ether, N,N,N',N'-tetraglycidylethylenediamine, glycerine diglycidyl ether, etc. The aziridine-based crosslinking agent may be N,N'-toluene-2,4-bis(1-aziridinecarboxide), N,N'-diphenylmethane-4,4'-bis(1-aziridinecarboxide), triethylenemelamine, bisisophthaloyl-1-(2-methylaziridine), tri-1-aziridinylphosphine oxide, etc.

The metal chelate-based crosslinking agent may be a coordination compound of a polyvalent metal such as aluminum, iron, zinc, tin, titanium, antimony, magnesium, vanadium, etc. with acetylacetone or ethyl acetoacetate.

The adhesive composition of the present invention may be prepared by solution coating, heating or photocuring without any particular limitations. It may be obtained by treating the acrylic copolymer and crosslinking agent with heat or light by a conventional method and mixing them. For a uniform coating, the crosslinking of the functional group of the crosslinking agent should be minimized while the polyfunctional crosslinking agent is added to form the adhesive layer by thermal crosslinking. A crosslinkage structure is formed following the coating, drying and aging, resulting in an elastic and highly cohesive adhesive layer. The cohesiveness of the adhesive improves such adhesion properties as endurance reliability and ease of cutting.

In regard to the optimization of physical properties, the crosslinking density of the acrylic adhesive is determined to be in the range from 5 to 95 %. In this description, the crosslinking density refers to the weight proportion of the acrylic adhesive that has developed a crosslinkage structure and is not dissolved by a solvent determined by the commonly known gel content measurement. If the crosslinking density of the adhesive is smaller than 5 %, the adhesive becomes less cohesive and there may be an adhesion durability problem such as foaming or peeling. In contrast, if it is larger than 95 %, an endurance reliability problem such as sagging may occur.

The composition of the present invention may further comprise a silane-based coupling agent to further improve the adhesion stability to the glass plate under hot or humid conditions. Particularly, the silane-based coupling agent improves adhesion reliability when the adhesive is exposed to hot or humid conditions for a long period of time. The coupling agent may be used in 0.005-5 parts by weight per 100 parts by weight of the acrylic copolymer. The silane-based coupling agent may be γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltriethoxysilane, 3-isocyanatepropyltriethoxysilane, γ-acetoacetatepropyltrimethoxysilane, etc. and may be used alone or in combination.

The composition of the present invention may further comprise a resin for improving the adhesion property in 1-100 parts by weight per 100 parts by weight of the acrylic copolymer. If the resin is used in excess, compatibility or cohesiveness of the adhesive may decline. For the resin for improving the adhesion property, (hydrated) hydrocarbon resin, (hydrated) rosin resin, (hydrated) rosin ester resin, (hydrated) terpene resin, (hydrated) terpene phenol resin, polymerized rosin resin, polymerized rosin ester resin, etc. may be used alone or in combination.

In addition, an acrylic molecular weight material, epoxy resin, hardener, UV stabilizer, antioxidant, colorant, modifier, filler, defoamer, surfactant, plasticizer, etc. may be added for particular or general purposes.

The present invention also provides a polarizing plate comprising the acrylic adhesive composition as an adhesive layer of a polarizing film. The polarizing plate comprises an adhesive layer formed from the adhesive composition on one or both sides of the polarizing film, and the polarizing film or polarizing element comprising the polarizing plate is not particularly limited. Preferably, a film prepared by including a polarizing element such as iodine or dichromatic dye in a polyvinyl alcohol resin may be used. The thickness of the polarizing film is not particularly limited, either. The polyvinyl alcohol resin may be a gummed substance of polyvinyl alcohol, polyvinylformal, polyvinylacetal, polyvinylethylene, vinyl acetate copolymer, etc.

On either side of the polarizing film, a multi-layered protective film from among a cellulose film such as triacetalcellulose, etc., a polycarbonate film, a polyester film such as polyethylene terephthlate, etc., a polyethersulfone film, a polyolefin film such as polyethylene, polypropylene, cyclo- or norbornene-polyolefin, ethylene-propylene copolymer, etc. may be formed. The thickness of the protective film is not particularly limited.

The method for forming the adhesive layer on the polarizing film of the present invention is particularly limited. The adhesive may be directly coated on the surface of the polarizing film using a bar coater, etc. and dried. Alternatively, the adhesive may be dried on the surface of a strippable substrate and the adhesive layer formed on the strippable substrate may be transferred to the surface of the polarizing film and then aged.

The polarizing plate of the present invention may further comprise at least one functional layer such as a protective film, a reflective film, an antiglare film, a phase difference plate, a wide view angle compensation film, a brightness enhancement film, etc.

The polarizing plate comprising the adhesive of the present invention may be applied to any commonly used liquid crystal display devices, without limitation. Preferably, the liquid crystal display device of the present invention may comprise a liquid crystal panel in which the afore-mentioned polarizing plate is bonded on one or both sides of a liquid crystal cell.

The acrylic adhesive composition of the present invention may be applied in industrial sheets, particularly for protective films, reflection sheets, adhesive sheets for structural use, adhesive sheets for photographic use, adhesive sheets for traffic paints, adhesive for optical use, adhesive for electronic devices, etc. without limitation. Further, it may be used in other multi-layered laminate products, including commercial adhesive sheets for general use, patches for medical use, heat-activated pressure-sensitive adhesive, etc.

The adhesive composition of the present invention, which comprises a metal salt composed of an anion having a perfluoroalkyl group, which is a conjugate base of a super acid, and an alkali metal cation, does not whiten under high temperature and humidity and has a superior antistatic property and endurance reliability.

### Best Mode for Carrying Out the Invention

Practical and preferred embodiments of the present invention are illustrated as shown in the following examples. However, it will be appreciated that those skilled in the art may, upon consideration of this disclosure, make modifications and improvements within the spirit and scope of the present invention.

Example 1

<Preparation of acrylic copolymer>

Into a 1 L reactor equipped with a nitrogen reflux apparatus and a cooler for temperature control were added a monomer mixture comprising 98.3 parts by weight of n-butyl acrylate (BA), 0.5 part by weight of acrylic acid (AA) and 1.2 parts by weight of hydroxyethyl methacrylate (2-HEMA), and 100 parts by weight of ethyl acetate (EAc), as solvent. The reactor was purged with nitrogen gas for 1 hour in order to remove oxygen and maintained at 62°C. After homogenizing the mixture, 0.03 parts by weight of azobisisobutyronitrile (AIBN) diluted in ethyl acetate to a concentration of 50 % was added as a reaction initiator. The reaction was carried out for 8 hours to obtain an acrylic copolymer.

<Preparation of room temperature eutectic salt>

Lithium bistrifluoromethanesulfonylimide and acetamide were mixed at room temperature at a proportion of 1:1 by weight and left alone for about 12 hours to obtain a metallic eutectic salt.

<Mixing>

0.5 part by weight of trimethylolpropane-TDI (tolylene diisocyanate adduct), as plasticizer, and 8 parts by weight of the room temperature eutectic salt were added to 100 parts by weight of the acrylic copolymer prepared above. After diluting to an adequate concentration considering the coating property, the mixture was mixed uniformly and coated on a release paper and dried to obtain a uniform adhesive layer with a thickness of 25 microns.

<Lamination>

The resultant adhesive layer was applied on an iodine-based polarizing plate having a thickness of 185 microns and cut to an adequate size. Tests were performed on the polarizing plate and the results are given in Table 2 below.

Examples 2-15

Copolymerization was performed under the conditions given in Table 1 below and Example 1. Urea was used in addition to acetamide and lithium bispentafluoroethanesulfonylimide or potassium bistrifluoromethanesulfonylimide was used instead of lithium bistrifluoromethanesulfonylimide to prepare the room temperature eutectic salt. Preparation of the acrylic copolymer, mixing and lamination were performed in the manner similar to that of Example 1. Endurance reliability, surface resistance and haze measurement results are given in Table 2.

Comparative Examples 1-7

Preparation of the acrylic copolymer, mixing and lamination were performed in the manner similar to that of Example 1 using a compound having an amide only, a metal salt only or a metal salt other than the one represented by the formula (1). Endurance reliability, surface resistance and haze measurement results are given in Table 2.

[Physical property test]

Haze

Haze was measured for a sample of PET films, to which the adhesive was laminated on both sides, to evaluate whitening. The test sample was cut to a size of 40 X 70 mm² and diffusive transmittance (T_{d}) and total transmittance (Tᵢ) were measured in accordance with JIS K7150 and ASTM D 1003-95. Haze is defined by the ratio of T_{d} to Tᵢ. Haze measurement was performed before and after keeping the test sample at 60 (C and R.H. 90 % for 1000 hours. Whitening was evaluated by comparing the difference in haze.

Endurance reliability

A polarizing plate (90 mm X 170 mm), on which the adhesive prepared above was coated, was attached on either side of a glass plate (110 mm X 190 mm X 0.7 mm), so that the light absorption axes were perpendicular to each other. A pressure of about 5 kg/cm² was applied in order to prevent foaming or contamination by impurities. The sample was kept at 60°C and R.H. 90 % for 1000 hours. After keeping it at room temperature for 24 hours, an observation was made to find out if there had been foaming or peeling. The evaluation standard is as follows.

O: Foaming or peeling not observed.

X: Foaming or peeling observed.

Surface resistance

A release film was removed from the polarizing plate on which the adhesive prepared above was coated and surface resistance was measured at the adhesive surface. Surface resistance was measured after applying a voltage of 500 V for 1 minute at 23°C and R.H. 50 %.

[Table 1. Compositions for Examples and Comparative Examples]

Composition 1: *n*-BA:AA:2-HEMA/crosslinking agent = 98.3:0.5:1.2/0.5 (based on weight)

Composition 2: *n*-BA:EA:2-HEA/crosslinking agent = 88.0:9.5:2.5/0.5 (based on weight)

(*n*-BA = *n*-butyl acrylate, 2-HEMA = 2-hydroxyethyl methacrylate, AA = acrylic acid, EA = ethyl acrylate, 2-HEA = 2-hydroxyethyl acrylate)

**Table 1**

| | Composition 1 | Composition 2 | A | B | C | D | E | F | G |
|---|---|---|---|---|---|---|---|---|---|
| Ex. 1 | O | | 0.1 | | | | | 0.1 | |
| Ex. 2 | O | | 4 | | | | | 4 | |
| Ex. 3 | O | | 4 | | | | | | 4 |
| Ex. 4 | | O | 4 | | | | | 4 | |
| Ex. 5 | O | | | 0.1 | | | | 0.1 | |
| Ex. 6 | O | | | 4 | | | | 4 | |
| Ex. 7 | O | | | 4 | | | | | 4 |
| Ex. 8 | | O | | 4 | | | | 4 | |
| Ex. 9 | O | | | | 0.1 | | | 0.1 | |
| Ex. 10 | O | | | | 4 | | | 4 | |
| Ex. 11 | O | | | | 4 | | | | 4 |
| Ex. 12 | | O | | | 4 | | | 4 | |
| Ex. 13 | O | | 4 | 4 | | | | 8 | |
| Ex. 14 | O | | | 4 | 4 | | | 8 | |
| Ex. 15 | O | | 4 | | 4 | | | 8 | |
| Comp. Ex. 1 | O | | | | | | | 4 | |
| Comp. Ex. 2 | O | | | | | | | | 4 |
| Comp. Ex. 3 | O | | | | | 4 | | 4 | |
| Comp. Ex. 4 | O | | | | | | 4 | 4 | |
| Comp. Ex. 5 | O | | 4 | | | | | | |
| Comp. Ex. 6 | O | | | 4 | | | | | |
| Comp. Ex. 7 | O | | | | 4 | | | | |

A: Lithium bistrifluoromethanesulfonylimide (LiN(SO₂CF₃)₂)

B: Lithium bispentafluoroethanesulfonylimide (LiN(SO₂C₂F₅)₂)

C: Potassium bistrifluoromethanesulfonylimide (KN(SO₂CF₃)₂)

D: Sodium thiocyanate (NaSCN)

E: Ammonium thiocyanate (NH₄SCN)

F: Acetamide (CH₃CONH₂)

G: Urea (NH₂CONH₂)

**Table 2**

| | Endurance reliability | | Surface resistance (Ω/□) | Haze |
|---|---|---|---|---|
| | 80 °C, 1000 hours | 60 °C, R.H. 90 %, 1000 hours | | |
| Ex. 1 | O | O | 9×10¹⁰ | 0.2 |
| Ex. 2 | O | O | 1×10⁹ | 0.2 |
| Ex. 3 | O | O | 2×10⁹ | 0.3 |
| Ex. 4 | O | O | 5×10⁹ | 0.2 |
| Ex. 5 | O | O | 1.1×10¹¹ | 0.2 |
| Ex. 6 | O | O | 2×10⁹ | 0.2 |
| Ex. 7 | O | O | 3×10⁹ | 0.3 |
| Ex. 8 | O | O | 8×10¹⁰ | 0.2 |
| Ex. 9 | O | O | 9×10¹¹ | 0.2 |
| Ex. 10 | O | O | 6×10⁹ | 0.2 |
| Ex. 11 | O | O | 9x10⁹ | 0.3 |
| Ex. 12 | O | O | 1×10¹⁰ | 0.2 |
| Ex. 13 | O | O | 7×10⁸ | 0.2 |
| Ex. 14 | O | O | 7×10⁹ | 0.2 |
| Ex. 15 | O | O | 4×10⁹ | 0.2 |
| Comp. Ex. 1 | O | O | 8×10¹³ | 0.2 |
| Comp. Ex. 2 | O | O | 9×10¹³ | 0.2 |
| Comp. Ex. 3 | X | X | 3×10¹¹ | 81 |
| Comp. Ex. 4 | X | X | 7×10¹⁰ | 30 |
| Comp. Ex. 5 | O | O | 7×10⁹ | 0.2 |
| Comp. Ex. 6 | O | O | 3×10⁹ | 0.2 |
| Comp. Ex. 7 | O | O | 9×10⁹ | 0.2 |

As seen in Table 2, Examples 1-15 showed comparable endurance reliability and absence of whitening compared with Comparative Examples 1-7. But, they showed significantly reduced surface resistance, which is related with an antistatic property.

### Industrial Applicability

As is apparent from the foregoing description, the adhesive composition of the present invention has superior endurance reliability and antistatic property and does not whiten under high temperature and humidity.

[98] Those skilled in the art will appreciate that the concepts and specific embodiments disclosed in the foregoing description may be readily utilized as a basis for modifying or designing other embodiments for carrying out the same purposes of the present invention. Those skilled in the art will also appreciate that such equivalent embodiments do not depart from the spirit and scope of the present invention as set forth in the appended claims.

## Claims

1. An acrylic adhesive composition comprising a room temperature eutectic salt prepared by mixing a metal salt represented by the formula (1) below, composed of an anion having a perfluoroalkane group, which is a conjugate base of a super acid, and an alkali metal cation with a compound having an amide group represented by the formula (2) below:
[Chemistry Figure 1] M⁺ X⁻ (YOm R_{f})n
where M is an alkali metal cation and R_{f} is a perfluoroalkane group having 1-4 carbon atoms (If Y is carbon, m = 1. If Y is sulfur, m = 2. If X is oxygen, n = 1. If X is nitrogen, n =2. If X is carbon, n = 3.); 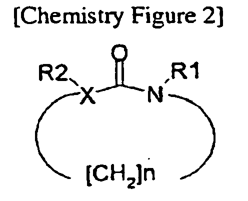 where R₁ is hydrogen, an alkyl group having 1-10 carbon atoms, an alkenyl group having 2-10 carbon atoms or an aryl or alkaryl group having 6-10 carbon atoms; R₂ is hydrogen, halogen, an alkyl group having 1-10 carbon atoms, an alkenyl group having 2-10 carbon atoms or an aryl or alkaryl group having 6-10 carbon atoms; X is carbon or nitrogen; and n is 0-6.

2. An acrylic adhesive composition comprising:
a) 100 parts by weight of an acrylic copolymer,
b) 0.001-25 parts by weight of a room temperature eutectic salt prepared by mixing a metal salt represented by the formula (1) below, composed of an anion having a perfluoroalkane group, which is a conjugate base of a super acid, and an alkali metal cation with a compound having an amide group represented by the formula (2) below; and
c) 0.01-10 parts by weight of a polyfunctional crosslinking agent:
[Chemistry Figure 1] M⁺ X⁻ (YOm R_{f})ₙ
where M is an alkali metal cation and R_{f} is a perfluoroalkane group having 1-4 carbon atoms (If Y is carbon, m = 1. If Y is sulfur, m = 2. If X is oxygen, n = 1. If X is nitrogen, n =2. If X is carbon, n = 3.); 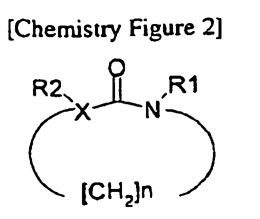 where R is hydrogen, an alkyl group having 1-10 carbon atoms, an alkenyl group having 2-10 carbon atoms or an aryl or alkaryl group having 6-10 carbon atoms; R₂ is hydrogen, halogen, an alkyl group having 1-10 carbon atoms, an alkenyl group having 2-10 carbon atoms or an aryl or alkaryl group having 6-10 carbon atoms; X is carbon or nitrogen; and n is 0-6.

3. The acrylic adhesive composition as set forth in Claim 2, wherein a) the acrylic copolymer is obtained by copolymerizing 90-99.9 parts by weight of a (meth)acrylate ester monomer having an alkyl group with 1-12 carbon atoms with 0.1-10 parts by weight of a vinylic and/or acrylic monomer having a crosslinkable functional group.

4. The acrylic adhesive composition as set forth in Claim 3, wherein the (meth)acrylate ester monomer having an alkyl group is at least one alkyl ester having 2-8 carbon atoms selected from the group consisting of butyl (meth)acrylate, 2-ethylhexyl (meth)acrylate, ethyl (meth)acrylate, methyl (meth)acrylate, propyl (meth)acrylate, isopropyl (meth)acrylate, *t*-butyl (meth)acrylate, pentyl (meth)acrylate, octyl (meth)acrylate, isononyl (meth)acrylate, 2-ethylbutyl (meth)acrylate and isooctyl (meth)acrylate.

5. The acrylic adhesive composition as set forth in Claim 3, wherein the monomer having a crosslinkable functional group is at least one selected from the group consisting of 2-hydroxyethyl (meth)acrylate, 2-hydroxypropyl (meth)acrylate, 4-hydroxybutyl (meth)acrylate, 2-hydroxyethylene glycol (meth)acrylate, 2-hydroxypropylene glycol (meth)acrylate, acrylic acid, methacrylic acid, acrylic acid dimer, itaconic acid, maleic acid and maleic anhydride.

6. The acrylic adhesive composition as set forth in Claim 2, wherein the alkali metal salt in b) is composed of at least one anion having a perfluoroalkylsulfone group, which is a conjugate base of a super acid, selected from the group consisting of bistrifluoromethanesulfonimide (N(SO₂CF₃)₂⁻), bistrifluoromethanecarbonylsulfonimide (N(COCF₃)₂⁻), bispentafluoroethanesulfonimide (N(SO₂C₂F₅)₂⁻) bispentafluoroethanecarbonylimide (N(COC₂F₅)₂⁻), bisperfluorobutanesulfonimide (N(SO₂C₄F₉)₂⁻), bisperfluorobutanecarbonylimide (N(COC₄ F₉)₂⁻), tristrifluoromethanesulfonylmethide (C(SO₂CF₃)₃⁻) and tristrifluoromethanecarbonylmethide (C(COCF₃)₃⁻), and at least one alkali metal cation selected from the group consisting of lithium (Li⁺), sodium (Na⁺) and potassium (K⁺).

7. The acrylic adhesive composition as set forth in Claim 2, wherein the compound having an amide group in b) is acetamide, N-methylacetamide, N-ethylacetamide, propionamide, urea, N,N'-dimethylurea, N,N,N'-trimethylurea, 2-imidazolidinone,2,4-imidazolidinone, N,N'-trimethyleneurea, caprolactam (cyclic amide), 2-azetidinone, 2-pyrrolidinone, 5-methyl-2-pyrrolidinone, 2-piperidinone, 3-propyl-2-azepanone, 5-butyl-2-azepanone, 7-butyl-2-azepanone or 1-aza-2-cyclooctane.

8. The acrylic adhesive composition as set forth in Claim 2, wherein c) the polyfunctional crosslinking agent is at least one selected from the group consisting of an isocyanate-based compound, an epoxy-based compound, an aziridine-based compound and a metal chelate-based compound.

9. The acrylic adhesive composition as set forth in Claim 2, wherein the acrylic copolymer is prepared by a polymerization method selected from the group consisting of solution polymerization, photopolymerization, bulk polymerization, suspension polymerization and emulsion polymerization.

10. The acrylic adhesive composition as set forth in any of Claims 2 to 9, which has a crosslinking density of 5-95 %.

11. An adhesive polarizing plate comprising the acrylic adhesive composition as set forth in Claim 1 or Claim 2 on one or both sides of a polarizing film as an adhesive layer.

12. The adhesive polarizing plate as set forth in Claim 11, which further comprises at least one layer selected from the group consisting of a protective film, a reflective film, an antiglare film, a phase difference plate, a wide view angle compensation film and a brightness enhancement film.

13. A liquid crystal display device comprising a liquid crystal panel in which the adhesive polarizing plate as set forth in Claim 11 or Claim 12 is attached on one or both sides of a liquid crystal cell.

## Patentansprüche

1. Klebemittelzusammensetzung auf Acrylatbasis, umfassend ein bei Raumtemperatur eutektisches Salz, das hergestellt ist durch Vermischen eines Metallsalzes, dargestellt durch die Formel (1) unten, bestehend aus einem Anion mit einer Perfluoralkangruppe, das eine konjugierte Base einer Supersäure ist, und einem Alkalimetall-Kation, mit einer Verbindung mit einer Amidgruppe, dargestellt durch die Formel (2) unten:
[Formel 1] M⁺ X⁻ (YOm R_{f})ₙ
worin M ein Alkalimetall-Kation ist und R_{f} eine Perfluoralkangruppe mit 1-4 Kohlenstoffatomen ist (Wenn Y Kohlenstoff ist, m = 1. Wenn Y Schwefel ist, m = 2. Wenn X Sauerstoff ist, n = 1. Wenn X Stickstoff ist, n = 2. Wenn X Kohlenstoff ist, n = 3.); 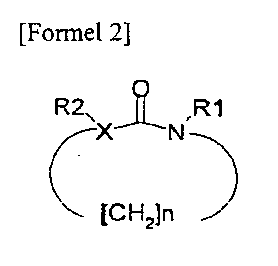 worin R₁ Wasserstoff, eine Alkylgruppe mit 1-10 Kohlenstoffatomen, eine Alkenylgruppe mit 2-10 Kohlenstoffatomen oder eine Aryl- oder Alkarylgruppe mit 6-10 Kohlenstoffatomen ist; R₂ Wasserstoff, Halogen, eine Alkylgruppe mit 1-10 Kohlenstoffatomen, eine Alkenylgruppe mit 2-10 Kohlenstoffatomen oder eine Aryl- oder Alkarylgruppe mit 6-10 Kohlenstoffatomen ist; X Kohlenstoff oder Stickstoff ist; und n 0-6 ist.

2. Klebemittelzusammensetzung auf Acrylatbasis, umfassend:
a) 100 Gewichtsteile eines Acryl-Copolymers;
b) 0,001-25 Gewichtsteile eines bei Raumtemperatur eutektischen Salzes, das hergestellt ist durch Vermischen eines Metallsalzes, dargestellt durch die Formel (1) unten, bestehend aus einem Anion mit einer Perfluoralkangruppe, das eine konjugierte Base einer Supersäure ist, und einem Alkalimetall-Kation, mit einer Verbindung mit einer Amidgruppe, dargestellt durch die Formel (2) unten:
[Formel 1] M⁺ X⁻ (YOm R_{f})ₙ
worin M ein Alkalimetall-Kation ist und R_{f} eine Perfluoralkangruppe mit 1-4 Kohlenstoffatomen ist (Wenn Y Kohlenstoff ist, m = 1. Wenn Y Schwefel ist, m = 2.
Wenn X Sauerstoff ist, n = 1. Wenn X Stickstoff ist, n = 2. Wenn X Kohlenstoff ist, n =3.); 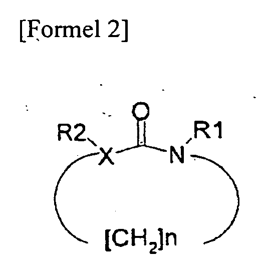 worin R₁ Wasserstoff, eine Alkylgruppe mit 1-10 Kohlenstoffatomen, eine Alkenylgruppe mit 2-10 Kohlenstoffatomen oder eine Aryl- oder Alkarylgruppe mit 6-10 Kohlenstoffatomen ist; R₂ Wasserstoff, Halogen, eine Alkylgruppe mit 1-10 Kohlenstoffatomen, eine Alkenylgruppe mit 2-10 Kohlenstoffatomen oder eine Aryl- oder Alkarylgruppe mit 6-10 Kohlenstoffatomen ist; X Kohlenstoff oder Stickstoff ist;
und n 0-6 ist.

3. Klebemittelzusammensetzung auf Acrylatbasis nach Anspruch 2, wobei a) das AcrylCopolymer erhalten ist durch Copolymerisation von 90-99,9 Gewichtsteilen eines (Meth)acrylatesters mit einer Alkylgruppe mit 1-10 Kohlenstoffatomen mit 0,1-10 Gewichtsteilen eines Vinyl- und/oder Acryl-Monomers mit einer vernetzbaren funktionellen Gruppe.

4. Klebemittelzusammensetzung auf Acrylatbasis nach Anspruch 3, wobei das (Meth)acrylatester-Monomer mit einer Alkylgruppe wenigstens ein Alkylester mit 2-8 Kohlenstoffatomen ist, ausgewählt aus der Gruppe, bestehend aus Butyl(meth)acrylat, 2-Ethylhexyl(meth)acrylat, Ethyl(meth)acrylat, Methyl(meth)acrylat, Propyl(meth)acrylat, Isopropyl(meth)acrylat, t-Butyl(meth)acrylat, Pentyl(meth)acrylat, Octyl(meth)acrylat, Isononyl(meth)acrylat, 2-Ethylbutyl(meth)acrylat und Isooctyl(meth)acrylat.

5. Klebemittelzusammensetzung auf Acrylatbasis nach Anspruch 3, wobei das Monomer mit einer vernetzbaren funktionellen Gruppe wenigstens eines ist, das ausgewählt ist aus der Gruppe, bestehend aus 2-Hydroxyethyl(meth)acrylat, 2-Hydroxypropyl(meth)acrylat, 4-Hydroxybutyl(meth)acrylat, 2-Hydroxyethylenglykol(meth)acrylat, 2-Hydroxypropylenglykol(meth)acrylat, Acrylsäure, Methacrylsäure, Acrylsäure-Dimer, Itaconsäure, Maleinsäure und Maleinsäureanhydrid.

6. Klebemittelzusammensetzung auf Acrylatbasis nach Anspruch 2, wobei das Alkalimetallsalz in b) aus wenigstens einem Anion mit einer Perfluoralkylsulfongruppe, das eine konjugierte Base einer Supersäure ist, ausgewählt aus der Gruppe, bestehend aus Bistrifluormethansulfonimid (N(SO₂CF₃)₂⁻), Bistrifluormethancarbonylsulfonimid (N(COCF₃)₂⁻), Bispentafluroethansulfonimid (N(SO₂C₂F₅)₂⁻), Bispentafluorethancarbonylimid (N(COC₂F₅)₂⁻), Bisperfluorbutansulfonimid (N(SO₂C₄F₉)₂⁻), Bisperfluorbutancarbonylimid (N(COC₄F₉)₂⁻), Tristrifluormethansulfonmethid (C(SO₂CF₃)₃⁻) und Tristrifluormethancarbonylmethid (C(COCF₃)₃⁻), und wenigstens einem Alkalimetall-Kation, ausgewählt aus der Gruppe, bestehend aus Lithium (Li⁺), Natrium (Na⁺) und Kalium (K⁺), besteht.

7. Klebemittelzusammensetzung auf Acrylatbasis nach Anspruch 2, wobei die Verbindung mit einer Amidgruppe in b) Acetamid, N-Methylacetamid, N-Ethylacetamid, Propionamid, Harnstoff, N,N'-Dimethylharnstoff, N,N,N'-Trimethylharnstoff, 2-Imidazolidinon, 2,4-Imidazolidinon, N,N'-Trimethylenharnstoff, Caprolactam (cyclisches Amid), 2-Azetidinon, 2-Pyrrolidinon, 5-Methyl-2-prrolidinon, 2-Piperidinon, 3-Propyl-2-azepanon, 5-Butyl-2-azepanon, 7-Butyl-2-azepanon oder 1-Aza-2-cyclooctan ist.

8. Klebemittelzusammensetzung auf Acrylatbasis nach Anspruch 2, wobei c) das polyfunktionelle Vernetzungsmittel wenigstens eines ist, das ausgewählt ist aus der Gruppe, bestehend aus einer Verbindung auf Isocyanat-Basis, einer Verbindung auf Epoxy-Basis, einer Verbindung auf Aziridin-Basis und einer Verbindung auf Metallchelat-Basis.

9. Klebemittelzusammensetzung auf Acrylatbasis nach Anspruch 2, wobei das AcrylCopolymer auf Acrylbasis hergestellt ist durch ein Polymerisationsverfahren, das ausgewählt ist aus der Gruppe, bestehend aus Lösungspolymerisation, Photopolymerisation, Massepolymerisation, Suspensionspolymerisation und Emulsionspolymerisation.

10. Klebemittelzusammensetzung auf Acrylatbasis nach einem der Ansprüche 2 bis 9, das eine Vernetzungsdichte von 5-95% besitzt.

11. Klebende Polarisierungsplatte, umfassend die Klebemittelzusammensetzung auf Acrylatbasis nach Anspruch 1 oder Anspruch 2 auf einer oder beiden Seiten eines Polarisierungsfilms als eine Klebeschicht.

12. Klebende Polarisierungsplatte nach Anspruch 11, die weiter wenigstens eine Schicht umfasst, die ausgewählt ist aus der Gruppe, bestehend aus einem Schutzfilm, einem reflektierendem Film, einem Antiglanzfilm, einer Phasendifferenzplatte, einem Weitwinkelkompensationsfilm und einem Helligkeitsverstärkungsfilm.

13. Flüssigkristalldisplayvorrichtung, umfassend eine Flüssigkristallplatte, in der die klebende Polarisierungsplatte nach Anspruch 11 oder Anspruch 12 auf einer oder beiden Seiten der Flüssigkristallzelle angebracht ist.

## Revendications

1. Composition adhésive acrylique contenant un sel eutectique à température ambiante préparé en mélangeant un sel métallique représenté par la formule (1) donnée ci-dessus, composé d'un anion possédant un groupe perfluoroalcane qui est une base conjuguée d'un superacide et d'un cation de métal alcalin avec un composé contenant un groupe amide représenté par la formule (2) donnée ci-dessous :
[Figure chimique 1] M⁺ X⁻ (YOm R_{f})ₙ
où M désigne un cation de métal alcalin et R_{f} représente un groupe perfluoroalcane contenant 1 à 4 atomes de carbone (Si Y désigne le carbone, m = 1. Si Y désigne le souffre, m = 2. Si X désigne l'oxygène, n = 1. Si X désigne l'azote, n = 2. Si X désigne le carbone, n = 3) ; 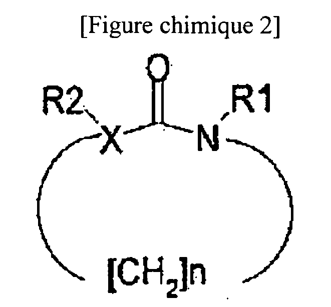 où R₁ désigne hydrogène, un groupe alkyle contenant 1 à 10 atomes de carbone, un groupe alkényle contenant 2 à 10 atomes de carbone ou un groupe aryle ou alkaryle contenant 6 à 10 atomes de carbone ; R₂ désigne hydrogène, halogène, un groupe alkyle contenant 1 à 10 atomes de carbone, un groupe alkényle contenant 2 à 10 atomes de carbone ou un groupe aryle ou alkaryle contenant 6 à 10 atomes de carbone ; X désigne carbone ou azote ; et n désigne 0 à 6.

2. Une composition adhésive acrylique, contenant :
a) 100 parties en poids d'un copolymère acrylique ;
b) 0,001 à 25 parties en poids d'un sel eutectique à température ambiante préparé en Mélangeant un sel métallique représenté par la formule (1) donnée ci-dessous, composé d'un anion possédant un groupe perfluoroalcane qui est une base conjuguée d'un superacide et d'un cation de métal alcalin avec un composé possédant un groupe amide représenté par la formule (2) donnée ci-dessous ; et
c) 0,01 à 10 parties en poids d'un agent réticulant polyfonctionnel :
[Figure chimique 1] M⁺ X⁻ (YOm R_{f})ₙ
où M désigne un cation de métal alcalin et R_{f} représente un groupe perfluoroalcane possédant 1 à 4 atomes de carbone (Si Y désigne le carbone, m = 1. Si Y désigne le souffre, m = 2. Si X désigne l'oxygène, n = 1. Si X désigne l'azote, n = 2. Si X désigne le carbone, n = 3) ; 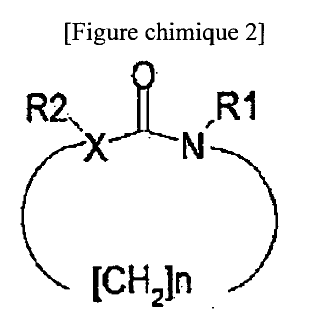 où R₁ désigne l'hydrogène, un groupe alkyle possédant 1 à 10 atomes de carbone, un groupe alkényle comprenant 2 à 10 atomes de carbone ou un groupe aryle ou alkaryle comprenant 6 à 10 atomes de carbone ; R₂ désigne hydrogène, halogène, un groupe alkyle contenant 1 à 10 atomes de carbone, un groupe alkényle contenant 2 à 10 atomes de carbone ou un groupe aryle ou alkaryle contenant 6 à 10 atomes de carbone ; X désigne carbone ou azote ; et n désigne 0 à 6.

3. Composition adhésive acrylique selon le procédé de la Revendication 2, dans laquelle a) le copolymère acrylique est obtenu par copolymérisation de 90 à 99,9 parties en poids d'un monomère ester de (méth)acrylate comprenant un groupe alkyle avec 1 à 12 atomes de carbone avec 0,1 à 10 parties en poids d'un monomère vinylique et/ou acrylique possédant un groupe fonctionnel réticulable.

4. Composition adhésive acrylique selon le procédé de la Revendication 3, dans laquelle le monomère ester de (méth)acrylate comprenant un groupe alkyle est au moins un ester d'alkyle contenant 2 à 8 atomes de carbone choisi dans le groupe constitué par (méth)acrylate de butyle, (méth)acrylate 2-éthylhexyl, (méth)acrylate d'éthyle, (méth)acrylate de méthyle, (méth)acrylate de propyle, (méth)acrylate d'isopropyle, (méth)acrylate de t-butyle, (méth)acrylate de pentyle, (méth)acrylate d'octyle, (méth)acrylate d'isononyle, (méth)acrylate 2-éthylbutyl et (méth)acrylate d'isooctyle.

5. Composition adhésive acrylique selon le procédé de la Revendication 3, dans laquelle le monomère comprenant un groupe fonctionnel réticulable est au moins choisi dans le groupe constitué par (méth)acrylate 2-hydroxyéthyle, (méth)acrylate 2-hydroxypropyle, (méth)acrylate 4-hydroxybutyle, (méth)acrylate 2-hydroxyéthylène glycol, (méth)acrylate 2-hydroxypropylène de glycol, acide acrylique, acide méthacrylique, dimère d'acide acrylique, acide itaconique, acide maléique et anhydride maléique.

6. Composition adhésive acrylique selon le procédé de la Revendication 2, dans laquelle le sel de métal alcalin en b) est composé d'au moins un anion comprenant un groupe perfluoroalkylsulfone qui est une base conjuguée d'un superacide choisi dans le groupe constitué par bistrifluorométhanesulfonimide (N(sO₂CF₃)₂⁻), bistrifluorométhanecarbonylsulfonimide N(COCF₃)₂⁻), bispentafluoroéthanesulfonimide N(SO₂C₂F₅)₂⁻), bispentafluoroéthanecarbonylimide (N)COC₂F₅)₂⁻), bisperfluorobutanesulfonimide (N(SO₂C₄F₉)₂⁻), bisperfluorobutanecarbonylimide (N(COC₄F₉)₂⁻), tristrifluorométhanesulfonylméthide (C(SO₂CF₃)₃⁻) et tristrifluorométhanecarbonylméthide (C(COCF₃)₃⁻) et au moins un cation de métal alcalin choisi dans le groupe constitué par lithium (Li⁺), sodium (Na+) et potassium (K+).

7. Composition adhésive acrylique selon le procédé de la Revendication 2, dans laquelle le composant comprenant un groupe amide dans b) est acétamide, N-méthylacétamide, N-éthylacétamide, propionamide, urée, N,N'-diméthylurée, N,N,N'-triméthylurée, 2-imidazolidinone, 2,4-imidazolidinone, N,N'-triméthylèneurée, caprolactam (amide cyclique), 2-azétidinone, 2-pyrrolidinone, 5-méthyl-2-pyrrolidinone, 2-piperidinone, 3-propyl-2-azépanone, 5-butyl-2-azépanone, 7-butyl-2-azépanone ou 1-aza-2-cyclooctane.

8. Composition acrylique selon le procédé de la Revendication 2, dans laquelle c) l'agent de réticulation polyfonctionnel est au moins choisi dans le groupe constitué par un composé à base d'isocyanates, un composé à base d'époxy, un composé à base d'aziridine et un composé à base de chélate métallique.

9. Composition adhésive acrylique selon le procédé de la Revendication 2, dans laquelle le copolymère acrylique est préparé par un procédé de polymérisation choisi dans le groupe comprenant polymérisation de la solution, photopolymérisation, polymérisation en vrac, polymérisation de la suspension et polymérisation de l'émulsion.

10. Composition adhésive acrylique selon le procédé des Revendications 2 à 9, possédant une densité de réticulation de 5 à 95%.

11. Plaque adhésive polarisante comprenant la composition adhésive acrylique selon le procédé de la Revendication 1 ou de la Revendication 2 sur un ou les deux côtés d'un film polarisant à titre de couche adhésive.

12. Plaque adhésive polarisante selon le procédé de la Revendication 11, comprenant en outre au moins une couche choisie dans le groupe constitué par film protecteur, film réfléchissant, film antireflets, plaque de différence de phase, film de compensation d'angle de vue large et film d'amélioration de la luminosité.

13. Dispositif d'affichage à cristaux liquides comprenant un panneau à cristaux liquides dans lequel la plaque adhésive polarisante selon le procédé de la Revendication 11 ou de la Revendication 12 est attachée sur un ou sur les deux côtés d'une cellule à cristaux liquides.
